# EUROPÄISCHE PATENTSCHRIFT

(11) **EP 2 408 632 B1**
(45) Veröffentlichungstag und Bekanntmachung des Hinweises auf die Patenterteilung: **21.05.2014**
(21) Anmeldenummer: 10704514.8
(22) Anmeldetag: 13.02.2010
(51) Int. Cl.: B60G 17/02, B60G 21/055

(54) **AKTIVES ELEKTROMECHANISCHES FEDERUNGSSYSTEM FÜR EIN FAHRWERK EINES KRAFTFAHRZEUGES**
ACTIVE ELECTROMECHANICAL SUSPENSION SYSTEM FOR A CHASSIS OF A MOTOR VEHICLE
SYSTÈME DE SUSPENSION ÉLECTROMÉCANIQUE ACTIF POUR UN CHÂSSIS DE VÉHICULE AUTOMOBILE

(30) Priorität: 20.03.2009 DE 102009014201
(43) Veröffentlichungstag der Anmeldung: 25.01.2012
(73) Patentinhaber: Audi AG, 85045 Ingolstadt (DE); Volkswagen Aktiengesellschaft, 38440 Wolfsburg (DE)
(72) Erfinder: OHLETZ, Armin, 85092 Kösching (DE); SCHMIDT, Walter, 86643 Rennertshofen (DE); MICHEL, Wilfried, 93339 Riedenburg (DE); HIPPE, Marko, 38536 Meinersen (DE); MÜLLER, Christian, 38102 Braunschweig (DE)
(74) Vertreter: Asch, Konrad
(86) Internationale Anmeldenummer: PCT/EP2010/000898
(87) Internationale Veröffentlichungsnummer: WO 2010/105721

(56) Entgegenhaltungen:
- EP-A2- 1 681 187
- EP-A2- 1 970 226
- DE-A1-102004 032 081
- DE-A1-102007 024 769
- DE-B3-102004 014 336

## Beschreibung

Die Erfindung betrifft ein aktives elektromechanisches Federungssystem für ein Fahrwerk eines Kraftfahrzeuges mit einer ersten und einer zweiten Achse für jeweils zwei sich gegenüberliegende Räder gemäß dem Oberbegriff des Patenanspruches 1.

Heutzutage sind aktive elektromechanische Federungssysteme, je nach Fahrzeugtyp, nach unterschiedlichen Prinzipien aufgebaut. Ziel dieser Systeme ist die weitere Verbesserung im Bereich Fahrdynamik und Komfort. Dabei haben sich innerhalb der Federungs- und Dämpfungssysteme eine Vielzahl von verschiedenen Systemen bereits etabliert, die sich bezüglich der physikalischen Wirkungsweise, nämlich pneumatisch, hydraulisch, elektrisch, der Mechatronisierung bestehender Komponenten, nämlich passiver hydraulischer Dämpfer oder aber geregelter hydraulischer Dämpfer oder auch beispielsweise der wirksamen Stellfrequenzänderungen, unterteilen lassen.

So ist beispielsweise aus der DE'10 2004 032 081 A1 ein verstellbares Fahrwerk mit einem, an einem Fahrzeugaufbau schwenkbar gelagerten ersten Achslenker für ein erstes Rad einer Achse und einen zweiten schwenkbar belagerten Achslenker für ein zweites Rad der Achse, wobei der erste und der zweite Achslenker jeweils eine Hauptfeder für den Fahrzeugaufbau tragen und eine Hilfsfeder aufweisen, die von einem Antriebsaggregat in ihrer Vorspannung einstellbar ist, bekannt geworden. Dabei wird die Hilfsfeder pro Achslenker jeweils von einem Torsionsstab gebildet, der an dem Achslenker angreift und zwei Elektromotoren als Antriebsaggregate die Torsion der Stäbe vorspannen.

Bei diesem Prinzip wird eine Parallelschaltung von Federn vorgenommen, wobei das statische Aufbaugewicht des Fahrzeuges an den Rädern jeweils von einer Feder getragen wird. Zusatzkräfte werden durch die Antriebsaggregate über die zweite Feder übertragen. Bei einer derartigen Ausführung sind für eine aktive Federung die Antriebsaggregate an allen beiden Achsen gleich.

Ein weiteres aktives Fahrwerk für ein Kraftfahrzeug kann der DE 10 2007 024 769 A1 entnommen werden. Dabei sind hier auch an einer ersten und einer zweiten Radaufhängungseinrichtung für jeweils zwei sich gegenüberliegende Räder mit Drehfedereigenschaften Elemente vorhanden, die mit einer Karosserie des Kraftfahrzeuges verbunden sind, wobei an jedem Element mit Drehfedereigenschaften mindestens eine Stelleinrichtung zur Niveauveränderung des Kraftfahrzeuges angreift.

Ferner sind dem Stand der Technik Ausführungen mit Schraubenfedern als Federbeine, so genannte Federbeinaktuatoren bekannt. Dabei wird der Fahrzeugaufbau über eine Reihenschaltung von zwei Federn getragen. Parallel zu der oberen Feder ist ein Aktuator, oder auch allgemein Antrieb genannt, vorhanden, der aus einem Motor und einem Getriebe besteht. Bei einer Aktivierung des Aktuators wird durch die Drehbewegung des Motors eine Federfußpunktverstellung an der unteren Feder erreicht. Diese Federfußpunktverstellung wirkt sich als Kraftstellung durch das Federbein aus. Es hat sich gezeigt, dass die Dynamik der Stelleingriffe begrenzt ist, so dass eine Schwingungsbeeinflussung der Aufbaubewegung nur im niederfrequenten Bereich erfolgen kann. Aus diesem Grunde ist zur Bedämpfung der höherfrequenten Schwingungen ein hydraulischer Dämpfer mit einer konstanten Kennung parallel zu den in Reihe geschalteten Federn vorhanden. Eine derartige Anordnung ist beispielsweise der DE 10 2004 014 336 B3 und EP 1 681 187 A2 zu entnehmen.

Aus dem Stand der Technik sind lediglich aktive Federungssysteme bekannt, deren Aktuatorbauformen an beiden Achsen gleich sind. Die Gleichheit der Aktuatoren (bis auf Abstimmteile, wie z.B. Federn) an allen vier Fahrzeugecken hat den Vorteil, dass durch höhere Stückzahlen Kostenvorteile erzielt werden können. Demgegenüber stehen auch Nachteile, die im Folgenden dargestellt werden:

In der Regel sind die verwendeten Achstypen in Fahrzeugen an Vorder- und Hinterachse nicht gleich. Während an der Vorderachse in Pkw mehrheitlich Federbeine bzw. Mehrlenkerachsen mit Federbeinen wie z.B. Mac Pherson, Doppelquerlenker, Vierlenkerachsen, zum Einsatz kommen, finden an der Hinterachse diverse Achskonstruktionen Anwendung. Neben Mehrlenkerachsen mit Federbeinen, insbesondere in Oberklassen-Limousinen, werden aus Bauraumgründen oftmals Mehrlenkerachsen oder Verbundlenkerachsen mit einer getrennten Feder-/Dämpferanordnung verwendet. Diese bieten den Vorteil, dass die sog. Durchladebreite im Kofferraum nicht durch um den Dämpfer angeordnete Feder eines Federbeins reduziert wird. Die Gleichheit der Aktuatorbauformen einer aktiven Federung in einem Fahrzeug hätte zur Folge, dass mit hoher Wahrscheinlichkeit sehr ähnliche bzw. gleiche Achstypen in diesem Fahrzeug verbaut sein müssten, z.B. Mehrlenkerachsen mit Federbeinen vorne und hinten. Nachdem dies bei vielen Fahrzeugherstellern nur im Oberklassensegment der Fall ist, führt dies zu einer eingeschränkten potenziellen Einsetzbarkeit aktiver Federungssysteme im Fahrzeugangebot des Herstellers. Alternativ könnten die Achsen speziell für den Einsatz der aktiven Federung angepasst werden. Neben der Erhöhung der Variantenvielfalt hätte dies aber auch eine Steigerung der fahrzeugseitigen Implementierungskosten zur Folge, wodurch die technisch-wirtschaftliche Systemumsetzung mehr als fraglich ist.

Aus der EP 1 970 226 A2 ist eine Radaufhängung für Kraftfahrzeuge bekannt, bei der an der Vorderachse und Hinterachse unterschiedliche Aktuatorbauformen zum Einsatz kommen.

Die Aufgabe der Erfindung besteht darin, ein aktives elektromechanisches Federungssystem zu schaffen, bei dem durch permanente, zielgerichtete Änderungen der Federungskräfte an jeder Karosserieecke eine weitere Verbesserung des Fahrverhaltens erreicht wird. Gleichzeitig soll eine Kostenreduzierung für derartige Federungssysteme für ein Fahrzeug erreicht werden.

Die Aufgabe der Erfindung wird durch die Merkmale des Patentanspruches 1 gelöst. Die Unteransprüche geben eine weitere Ausgestaltung des erfindungsgemäßen Gedankens wieder.

Die Erfindung fokussiert sich hierbei auf eine zielgerichtete Kombination verschiedener aktiver Stellelemente (Aktuatoren, Antriebe) und deren Ausführung zur optimalen Erreichung einer aktiven Federung. Ein derartiges aktives Federungssystem arbeitet über die Aktuatorik elektromotorisch nach dem Prinzip der Federfußpunktverstellung einer Stahlfeder. Es ist bei derartigen Systemen aufgrund der geringen Kraftleistungsdichte beispielsweise gegenüber hydraulischen Systemen sinnvoll, eine technische Ausführung nach dem teiltragenden Prinzip zu realisieren. Eine derartige Ausführung bedeutet, dass die Aktuatorik lediglich Zusatzkräfte zwischen jedem Radträger und der Karosserie erzeugt. Die gesamte statische Aufbaumasse wird dabei von mindestens einer zweiten oder mehreren Federn aufgenommen.

Ferner wird durch die Erfindung die Verwendung von gleichen Aktuatoren an jedem Achsende sowohl an der Vorder- als auch an der Hinterachse des Kraftfahrzeuges eine aktive Federung ausgeführt. Durch derartige Ausgestaltungen kann eine ernorme Kostenreduzierung erzielt werden.

Es ist deshalb Ziel der Erfindung, ein aktives, teiltragendes, elektromechanisches Federungssystem für Kraftfahrzeuge zu schaffen, bei dem an einer ersten Achse jeweils zwei aktive Federbeine als Federbeinaktuatoren und an der zweiten Achse zwei aktive Rotationsaktuatoren zum Einsatz kommen. Vorzugsweise werden dabei die aktiven Federbeinaktuatoren an der Vorderachse platziert, wobei die Rotationsaktuatoren an der Hinterachse verbaut werden. Durch eine derartige Vorgehensweise wird ein nur geringer Eingriff in die Ausführung von Serienachsen bei Kraftfahrzeugen vorgenommen.

Zur Kostenreduzierung führt dabei insbesondere, dass die Antriebe für sowohl der aktiven Federbeinaktuatoren als auch der Rotationsaktuatoren hinsichtlich des Bauraumes und der Leistungsdaten identisch sind. Der besondere Vorteil liegt darin, dass neben der Kostenreduzierung auch eine gleichartige Ansteuerung über die Bordelektronik möglich ist.
Für die Federbeine wird vorgeschlagen, dass als Übersetzungsgetriebe ein Kugelgewindegetriebe verwendet wird. Derartige Kugelgewindegetriebe sind geeignete Getriebe, um eine Rotationsbewegung in eine translatorische Bewegung an einem Federbein auszuführen.

Bei den Rotationsaktuatoren wird ein als Harmonic-Drive-Getriebe ausgebildeten Untersetzungsgetriebe eingesetzt.

Ein derartiges Getriebe hat eine sehr hohe Untersetzung und baut sehr Platz sparend auf.

Als sehr effektiv hat es sich erwiesen, dass die Rotationsaktuatoren an einem Achsträger oder einem Hilfsrahmen oder dergleichen befestigt werden, wobei der Achsträger oder der Hilfsrahmen oder dergleichen elastisch am Fahrzeugaufbau festgelegt werden. Eine derartige Anbindung oder Festlegung wird über Elastomerlager ausgeführt. Ein derartiges Elastomerlager hat eine progressive Kennlinie, die in Fahrzeughochrichtung ausgerichtet ist. Derartige Elastomerlager sind zur Aufnahme von Druckkräften, wie sie beispielsweise bei einer Beladung entstehen, sehr hilfreich. Im Gegensatz zu einer Achse ohne aktive Federung, d. h. die Einleitung der Federkraft wird direkt in die Karosserie oder über die Dämpferlager in die Karosserie weitergegeben, wird die Beladungskraft bei Rotationsaktuatoren an der Hinterachse über den Hilfsrahmen oder dergleichen in den Fahrzeugaufbau eingeleitet. Dieses führt zu einer Änderung der Lastpfade. Es wird deshalb zur Begrenzung des Lagerweges bei der Beladung und gleichzeitig auch ohne eine Beladung eine ausreichende Entkopplung zwischen dem Hilfsrahmen oder dergleichen und der Karosserie zu gewährleisten sein, die Lagerkennlinie in Fahrzeughochrichtung ist asymmetrisch mit einer Progression in Druckrichtung gestaltet.

Durch die vorliegende Erfindung wird an der Vorderachse eine gleiche oder direkte Kraftübertragung (größeres Kraftübersetzungsverhältnis) ausgeführt, als an der Hinterachse. Dieses bedeutet, dass pro Motorumdrehung des Antriebs die Kraftänderung auf der Radbasis bei unveränderter Einfederposition des Rades gegenüber dem Aufbau an der Vorderachse gleich oder größer als bei gleichem Vorgehen an der Hinterachse ist. Daraus leitet sich ab, dass das Kraftübersetzungsverhältnis an der Vorderachse des Kraftfahrzeuges größer oder gleich dem Kraftübersetzungsverhältnis an der Hinterachse des Kraftfahrzeuges ist. Vorzugsweise sind die Federbeine und die Federanordnung jeweils mit hydraulischen Dämpfern ausgestattet.

Die Erfindung wird nachfolgend anhand schematischer Darstellungen näher erläutert.

Es zeigt:
- Figur 1:: Eine schematische Darstellung eines Kraftfahrzeugaufbaues mit Federbeinaktuatoren und Rotationsaktuatoren;
- Figur 2:: eine bevorzugte Ausführungsform eines Federbeinaktuators in einer schematischen Darstellung;
- Figur 3:: eine bevorzugte Ausführungsform eines Rotationsaktuators in einer schematischen Darstellung.

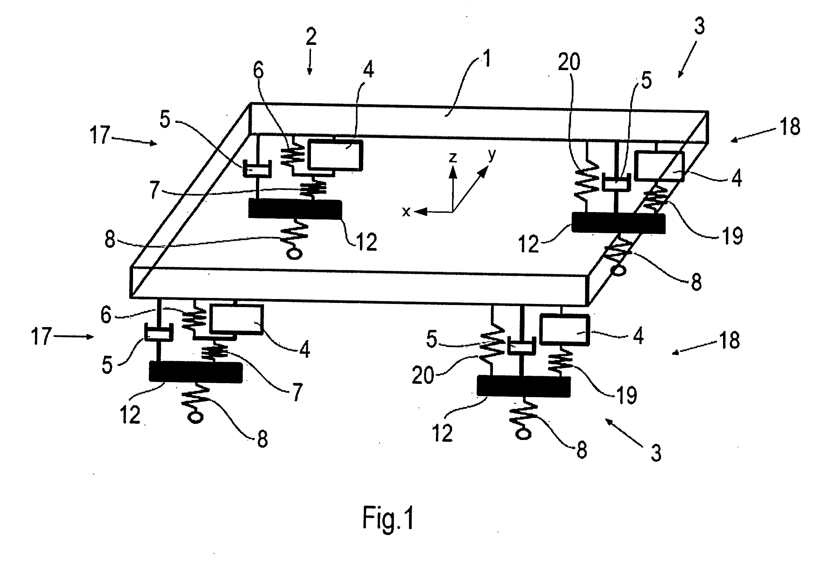

In Figur 1 ist eine Karosserie bzw. ein Teil einer Karosserie 1 schematisch dargestellt. Die Karosserie 1 ist dabei auf der linken Seite mit Federbeinen 17 und auf der rechten Seite mit Federanordnungen 18 verbunden. Die zugehörigen Achsen und Räder sind aus Gründen der Übersichtlichkeit nicht dargestellt.Es sei jedoch angemerkt, dass auf einer Achse stets nur Federbeine 17 oder Federanordnungen 18 mit den entsprechenden Rädern jeweils verwendet werden.

Der prinzipielle Aufbau eines Federbeines 17 für eine erste Achse besteht beispielsweise darin, dass eine erste Feder 6 mit einer zweiten Feder 7 als Reihenschaltung miteinander verbunden sind, wobei das freie Ende der ersten Feder 6 mittelbar oder unmittelbar mit der Karosserie 1 und das freie Ende der zweiten Feder 7 mit einem Achslenker 12 oder Radträger verbunden wird. Parallel zu der ersten Feder 6 und der zweiten Feder 7 ist eine hydraulische Dämpfungseinrichtung 5 vorhanden. Unterhalb der Feder 6 und der Feder 7 sowie des Dämpfers 5 ist noch schematisch mit dem Bezugszeigen 8 die Radfederung angegeben worden. Parallel zu der ersten Feder 6 ist ein Antrieb 4 als Aktuator dargestellt, auf den noch nachfolgend Bezug genommen wird.

Auf der zweiten Achse des Kraftfahrzeuges sind jeweils an den dort befindlichen Achslenkern 12 Federanordnungen 18 angeordnet. Eine derartige Federanordnung 18 besteht im Wesentlichen aus einem Rotationsaktuator, der einen gleichen Antrieb 4 wie das Federbein 17 aufweist. Somit sind für jedes Rad 9 des Kraftfahrzeuges die gleichen Antriebe 4 verwendet worden. In Reihe mit dem Antrieb 4 ist eine Feder 19 vorhanden, die durch den Antrieb 4 in ihrer wirkenden Kraft verändert wird. Parallel zu der Anordnung des Antriebes 4 und der Feder 19 ist auch hier ein hydraulischer Dämpfer 5 vorhanden, zudem ebenfalls parallel eine Feder 20 angeordnet ist. Die Feder 20 hat hier die Aufgabe, das Hauptgewic-ht der Karosserie zu tragen.

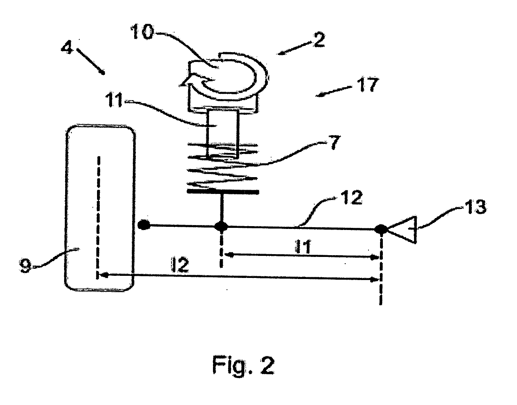

In der Figur 2 wird in einer schematischen Darstellung ein Federbein 17 wiedergeben. Der Antrieb 4 besteht dabei im Wesentlichen aus einem Motor 10 mit einem Getriebe 11. Ein derartiges Getriebe ist vorzugsweise als Kugelgewindetrieb ausgebildet. Der Übersicht halber ist hier in dieser schematischen Darstellung die Last aufnehmende erste Feder 6 nicht dargestellt worden. Das Getriebe 11 wirkt mit der zweiten Feder 7 so zusammen, dass vorzugsweise durch den Aktuator in Form des Antriebes 4 eine elektromechanische Verstellung der zweiten Feder 7 vorgenommen wird und zwar vorzugsweise nach dem Prinzip der Federfußpunktverstellung. Es versteht sich, dass die zweite Feder 7 als Stahlfeder ausgebildet ist, vorzugsweise als Schraubenfeder. Während der Motor 10 mit der Karosserie 1 oder dergleichen verbunden ist, ist die zweite Feder 7 mit ihrem freien Ende an einem Achslenker 12 angelenkt. Der Achslenker 12 ist ebenfalls über eine Verbindung 13 mit der Karosserie 1 verbunden. Von dem Befestigungspunkt der Verbindung 13 bis zu dem Befestigungspunkt, an dem die zweite Feder 7 mit dem Achslenker 12 verbunden ist, ergibt sich eine Strecke 11. Ebenfalls gerechnet von der Verbindung 13 aus liegt ein Rad 9 (in der Figur 2 auf der linken Seite neben dem Ende des Achslenkers 12), das eine Strecke 12 entfernt ist. Das Rad 9 wird durch die Radfederung 8 in der Figur 1 repräsentiert. Durch diese Darstellung wird deutlich, dass das Kraftübersetzungsverhältnis an der Achse gleich der Strecke 11 durch die Strecke 12 errechnet werden kann.

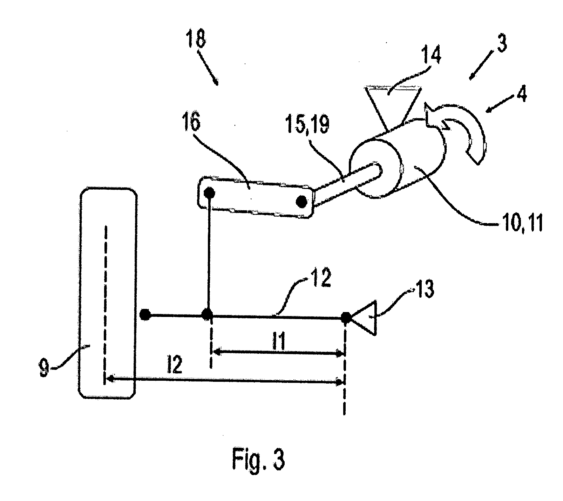

Bei der Ausführung des Rotationsaktuators 3 als Federanordnung 18 gemäß der Figur 3 wird ebenfalls der gleiche Antrieb 4 verwendet, der über eine Verbindung 14 an der Karosserie 1 befestigt ist. Auch hier besteht der Antrieb 4 aus dem Motor 10 mit dem Getriebe 11. Das Getriebe 11 ist in diesem Falle ein Untersetzungsgetriebe und wird vorzugsweise als Harmonic-Drive-Getriebe ausgebildet. Im Anschluss an den Antrieb 4 erschließt sich ein Torsionsstab 15 an, der als Drehfeder 19 ausgebildet ist. An dem freien Ende des Torsionsstabes 15 ist ein Antriebshebel 16 einseitig angebracht, dessen zweites freies Ende über eine Anbindung mit dem Achslenker 12 verbunden ist. Der Achslenker 12 ist im Übrigen genauso über die Verbindung 13 mit der Karosserie 1 verbunden wie gemäß Figur 2 schon dargelegt worden ist. Auch sind hier für das Übersetzungsverhältnis die gleichen Gesetzmäßigkeiten gegeben. Durch die Betätigung des Antriebes 4 als Rotationsaktuator 3 wird der Torsionsstab 15 verdreht, was eine Auslenkung des Antriebshebels 16 zur Folge hat, die sich auf den Achslenker 12 auswirkt.

Sowohl bei dem Ausführungsbeispiel der Figur 2 mit einem Federbeinaktuator und der Figur 3 mit einem Rotationsaktuator 3 wird deutlich, dass der Antrieb 4 lediglich Zusatzkräfte zwischen den Radträgern und der Karosserie 1 oder dergleichen erzeugt. Die gesamte statische Aufbaumasse wird von der in der Figur 1 dargestellten ersten Feder 6 bzw. der Feder 20 getragen. Der Übersicht halber sind diese Federelemente in den Figuren 2 und 3, sowie auch der Dämpfer 5, nicht dargestellt worden.

Durch die geniale Ausgestaltung der Erfindung wird deutlich, dass durch die Verwendung an einer Achse von Federbeinaktuatoren 2 und auf der anderen Achse von Rotationsaktuatoren 3 eine permanente, zielgerichtete Änderung der Federkräfte an jeder Karosserieecke erreicht wird. Gerade durch die Kombination der verschiedenen aktiven Stellelemente wird eine äußerst aktive Federung erreicht.

### Bezugszeichenliste

- 1: Karosserie
- 2: Federbeinaktuator
- 3: Rotationsaktuator
- 4: Antrieb
- 5: hydraulischer Dämpfer
- 6: erste Feder
- 7: zweite Feder
- 8: Radfederung
- 9: Rad
- 10: Motor
- 11: Getriebe
- 12: Achslenker
- 13: Verbindung
- 14: Verbindung
- 15: Torsionsstab
- 16: Antriebshebel
- 17: Federbein
- 18: Federanordnung
- 19: Feder
- 20: Feder

- x: positive Fahrzeugfahrtrichtung

## Patentansprüche

1. Aktives elektromechanisches Federungssystem für ein Fahrwerk eines Kraftfahrzeuges mit einer ersten und einer zweiten Achse für jeweils zwei sich gegenüberliegende Räder, wobei, der ersten Achse - Vorderachse - jeweils für die gegenüberliegenden Räder (9) Federbeine (17) mit Federbeinaktuatoren (2) und der zweiten Achse - Hinterachse - jeweils für die gegenüberliegenden Räder (9) Federanordnungen (18) mit Rotationsaktuatoren (3) zugeordnet sind, wobei die Federbeinaktuatoren (2) und die Rotationsaktuatoren (3) mit gleich ausgebildeten Antrieben (4) ausgestattet sind und der Antrieb (4) im Wesentlichen einen Motor (10) und ein Getriebe (11) umfasst und die Motoren (10) der Federbeinaktuatoren (2) und der Rotationsaktuatoren (3) gleich ausgebildet sind, **dadurch gekennzeichnet, dass** die Motoren (10) der Federbeinaktuatoren (2) jeweils mit einem als Kugelgewindegetriebe ausgebildeten Übersetzungsgetriebe ausgestattet sind, die eine Rotation in eine Translation umwandeln, und dass die Motoren (10) der Rotationsaktuatoren (3) mit einem als Harmonic-Drive-Getriebe ausgebildeten Untersetzungsgetriebe ausgestattet sind.

2. Federungssystem nach Anspruch 1, **dadurch gekennzeichnet, dass** die Rotationsaktuatoren (3) an einem Achsträger oder einem Hilfsrahmen befestigt sind.

3. Federungssystem nach Anspruch 2, **dadurch gekennzeichnet, dass** die Anbindung des Achsträgers oder des Hilfsrahmens an die Karosserie (1) über Elastomerlager ausgefügt wird.

4. Federungssystem nach Anspruch 3, **dadurch gekennzeichnet, dass** die Elastomerlager eine progressive Kraftlinie in Fahrzeughochrichtungen aufweisen.

5. Federungssystem nach einem oder mehreren der vorhergehenden Ansprüche, **dadurch gekennzeichnet, dass** die Federbeine (17) und die Federanordnungen (18) jeweils mit hydraulischen Dämpfern (5) ausgestattet sind.

6. Federungssystem nach einem oder mehreren der vorhergehenden Ansprüche, **dadurch gekennzeichnet, dass** die Federbeine (17) und die Federanordnungen (18) nach einem teiltragenden Prinzip aufgebaut sind.

7. Federungssystem nach einem oder mehreren der vorhergehenden Ansprüche, **dadurch gekennzeichnet, dass** der Aufbau des Federbeines (17) im Wesentlichen aus einer Reihenschaltung von einer ersten Feder (6) und einer zweiten Feder (7) besteht, wobei parallel zu der ersten Feder (6) der Antrieb (4) angeordnet ist.

8. Federungssystem nach einem oder mehreren der vorhergehenden Ansprüche, **dadurch gekennzeichnet, dass** der Aufbau der Federanordnung (18) im Wesentlichen aus einer Parallelschaltung einer Feder (20) und einer Feder (19) besteht, wobei der Antrieb (4) in Reihe mit der Feder (19) angeordnet ist.

## Claims

1. Active electromechanical suspension system for a chassis of a motor vehicle, having a first and a second axle for two opposing wheels in each case, the first axle - the front axle - being associated with spring struts (17) having spring strut actuators (2) for the respective opposing wheels (9), and the second axle - the rear axle - being associated with spring arrangements (18) having rotary actuators (3) for the respective opposing wheels (9), the spring strut actuators (2) and the rotary actuators (3) being equipped with identically configured drives (4) and the drive (4) essentially comprising a motor (10) and a gear unit (11) and the motors (10) of the spring strut actuators (2) and the rotary actuators (3) being identically configured, **characterised in that** the motors (10) of the spring strut actuators (2) are each equipped with a step-up gear embodied as a ball screw which converts rotation into translation, and **in that** the motors (10) of the rotary actuators (3) are equipped with a reduction gear embodied as a harmonic drive gear unit.

2. Suspension system according to claim 1, **characterised in that** the rotary actuators (3) are attached to a cross member or an auxiliary frame.

3. Suspension system according to claim 2, **characterised in that** the attachment of the cross member or of the auxiliary frame to the body (1) is jointed by means of elastomer bearings.

4. Suspension system according to claim 3, **characterised in that** the elastomer bearings have a progressive line of force in the upward directions of the vehicle.

5. Suspension system according to one or more of the preceding claims, **characterised in that** the spring struts (17) and the spring arrangements (18) are each equipped with hydraulic shock absorbers (5).

6. Suspension system according to one or more of the preceding claims, **characterised in that** the spring struts (17) and the spring arrangements (18) are constructed according to a shared load principle.

7. Suspension system according to one or more of the preceding claims, **characterised in that** the construction of the spring strut (17) consists essentially of a series connection of a first spring (6) and a second spring (7), the drive (4) being arranged parallel to the first spring (6).

8. Suspension system according to one or more of the preceding claims, **characterised in that** the construction of the spring arrangement (18) consists essentially of a parallel connection of a spring (20) and a spring (19), the drive (4) being arranged in series with the spring (19).

## Revendications

1. Système de suspension électromécanique actif pour un châssis d'un véhicule automobile avec un premier et un second essieu pour à chaque fois deux roues à l'opposé l'une de l'autre,
des jambes de force à ressort (17) avec des actionneurs de jambes de force à ressort (2) étant associées au premier essieu - essieu avant - respectivement pour les roues opposées (9) et des dispositifs à ressort (18) avec des actionneurs de rotation (3) étant associés au second essieu - essieu arrière - respectivement pour les roues opposées (9),
les actionneurs de jambes de force à ressort (2) et les actionneurs de rotation (3) étant équipés de dispositifs d'entraînement (4) conçus à l'identique,
le dispositif d'entraînement (4) comprenant globalement un moteur (10) et un mécanisme de transmission (11)
et les moteurs (10) des actionneurs de jambes de force à ressort (2) et des actionneurs de rotation (3) étant conçus à l'identique,
**caractérisé**
**en ce que** les moteurs (10) des actionneurs de jambes de force à ressort (2) sont équipés chacun d'un mécanisme de transmission multiplicateur conçu comme une vis à billes qui transforme une rotation en une translation
et **en ce que** les moteurs (10) des actionneurs de rotation (3) sont équipés d'un mécanisme de transmission multiplicateur conçu comme un démultiplicateur harmonique.

2. Système de suspension selon la revendication 1, **caractérisé en ce que** les actionneurs de rotation (3) sont fixés à un support d'essieu ou à un faux châssis.

3. Système de suspension selon la revendication 2, **caractérisé en ce que** la liaison du support d'essieu ou du faux châssis à la carrosserie (1) est réalisée par l'intermédiaire de paliers en élastomère.

4. Système de suspension selon la revendication 3, **caractérisé en ce que** les paliers en élastomère comportent une ligne de force progressive dans la direction verticale du véhicule.

5. Système de suspension selon l'une ou plusieurs des revendications précédentes, **caractérisé en ce que** les jambes de force à ressort (17) et les dispositifs à ressort (18) sont équipés à chaque fois d'amortisseurs hydrauliques (5).

6. Système de suspension selon l'une ou plusieurs des revendications précédentes, **caractérisé en ce que** les jambes de force à ressort (17) et les dispositifs à ressort (18) sont construits selon un principe de support partiel.

7. Système de suspension selon l'une ou plusieurs des revendications précédentes, **caractérisé en ce que** la structure des jambes de force à ressort (17) consiste globalement en un montage en série d'un premier ressort (6) et d'un second ressort (7), le dispositif d'entraînement (4) étant agencé parallèlement au premier ressort (6).

8. Système de suspension selon l'une ou plusieurs des revendications précédentes, **caractérisé en ce que** la structure du dispositif à ressort (18) consiste globalement en un montage en parallèle d'un ressort (20) et d'un ressort (19), le dispositif d'entraînement (4) étant agencé en série avec le ressort (19).
